# EUROPÄISCHE PATENTSCHRIFT

(11) **EP 2 944 509 B1**
(45) Veröffentlichungstag und Bekanntmachung des Hinweises auf die Patenterteilung: **20.12.2017**
(21) Anmeldenummer: 14405044.0
(22) Anmeldetag: 14.05.2014
(51) Int. Cl.: B64D 11/06, B60N 2/34, B60N 2/44, B60N 2/36

(54) **Fahrzeugsitz mit bewegbarer Lehne**
Vehicle seat with moveable backrest
Siège de véhicule doté d'un dossier mobile

(43) Veröffentlichungstag der Anmeldung: 18.11.2015
(73) Patentinhaber: Lantal Textiles AG, 4901 Langenthal (CH)
(72) Erfinder: von Ballmoos, Roland, 8703 Erlenbach (CH); Gühmann, Andreas, 8118 Pfaffhausen (CH); Rohrbach, Oliver, 4702 Oensingen (CH)
(74) Vertreter: Kessler, Stephan

(56) Entgegenhaltungen:
- DE-A1-102009 057 435
- US-A- 4 669 780

## Beschreibung

### Technisches Gebiet

Die Erfindung betrifft einen Fahrzeugsitz mit wenigstens einer Lehne, welche in eine im Wesentlichen waagrechte Position bewegbar ist und welche mindestens ein pneumatisches Kissen aufweist und ein entsprechendes Verfahren.

### Stand der Technik

Fahrzeugsitze, welche sich durch eine Bewegung einer Lehne, wie beispielsweise einer Rückenlehne zu einer im Wesentlichen waagrechten Liegefläche verwandeln lassen, sind insbesondere im Flugzeugbau bekannt. Ein grundlegendes Problem derartiger Fahrzeugsitze ist der gesteigerte Platzbedarf in Längsrichtung in der Liegekonfiguration, insbesondere in Bezug auf mögliche Kollisionen mit weiteren Fahrzeugsitzen oder Elementen des Fahrzeugs. Oft sind in den teureren Beförderungsklassen derartige Sitze zumindest teilweise durch einen Rahmen oder eine Trennwand vom Rest der Kabine abgeschirmt, um einem Passagier die grösstmögliche Privatsphäre zu gewähren. Gerade bei Anwesenheit solcher Rahmen oder Trennwände ist der gesteigerte Platzbedarf des Flugzeugsitzes in einer Liegekonfiguration problematisch, da der von einem Sitz eingenommene Platz durch den Rahmen oder der Trennwand zusätzlich begrenzt wird.

Die EP 0 869 060 (Singapore Airlines) offenbart in einem Rahmen aufgenommene Flugzeugsitze. Beim Übergang von einer Sitz- in eine Liegestellung wird der Sitz relativ zum Rahmen nach vorne bewegt und die Sitzfläche sowie die Rückenlehne gegenüber dem Rahmen verschwenkt. Einzelne Teile des Sitzes, z.B. die Kopfstütze können pneumatische Elemente umfassen, um eine Anpassung des Sitzes an die Bedürfnisse der Benutzer zu ermöglichen.

Die EP 2 234 884 B1 (British Airways) beschreibt einen Flugzeug-Passagiersitz, welcher sich in ein im Wesentlichen flaches Bett wandeln lässt. Der Sitz umfasst eine Sitzfläche, eine Rückenlehne sowie eine Schale, die den Sitz teilweise umgibt. Eine Kopfstütze der Rückenlehne ist beweglich ausgeführt und verfügt über ein pneumatisches Element, mit dem sich die Kopfstütze verschwenken lässt, insbesondere um den Kopf eines Passagiers optimal zu stützen. Beim Absenken der Rückenlehne in die Liegeposition kann die Luft im pneumatischen Element automatisch abgelassen werden, so dass die Kopfstütze eine horizontale Lage einnimmt.

Die EP 1 781 539 B1 (Premium Aircraft Interiors) offenbart einen Flugzeugsitz, welcher sich in ein Bett verwandeln lässt. Der Flugzeugsitz ist in einem Winkel zur Kabinenwand angeordnet, so dass ein sich ergebender dreieckiger Raum zwischen Kopfende des Sitzes und Kabinenwand in der Liegeposition des Sitzes benutzt werden kann. Um das Absenken der Rückenlehne ohne Kollision mit der Kabinenwand zu ermöglichen, wird die Länge der Kombination Rückenlehne und Kopfstütze während des Absenkens temporär verkürzt. Über Antriebsmittel erfolgt eine relative Verschiebung zwischen Rückenlehne und Kopfstütze, so dass diese beim Absenken zueinander hin und nach erfolgtem Absenken wieder voneinander weg bewegt werden. Die US4669780 zeigt einen Fahrzeugsitz gemäß dem Oberbegriff des Anspruchs 1. Die aus dem Stand der Technik bekannten Fahrzeugsitze weisen den Nachteil auf, dass diese eine aufwändige und daher schwere Mechanik aufweisen müssen, um ein Verschwenken einer Lehne in eine Liegeposition zu ermöglichen. Ferner wird wegen der teilweise komplizierten Sequenz an Bewegungen der einzelnen Sitzteile der Sitzkomfort eines Passagiers während des Verstellens des Sitzes in die Liegeposition wesentlich beeinträchtigt.

### Darstellung der Erfindung

Aufgabe der Erfindung ist es, einen dem eingangs genannten technischen Gebiet zugehörenden Fahrzeugsitz zu schaffen, der einen möglichst einfachen Übergang von einer Sitz- in eine Liegeposition ermöglicht und eine möglichst einfache Konstruktion sowie ein möglichst geringes Gewicht aufweist.

Die Lösung der Aufgabe ist durch die Merkmale des Anspruchs 1 definiert. Gemäss der Erfindung umfasst der Fahrzeugsitz eine Sitzfläche sowie wenigstens eine zur Sitzfläche in einem Winkel stehende Lehne. Der Winkel zwischen der Sitzfläche und der wenigstens einen Lehne lässt sich über eine Verstellvorrichtung zwischen einer ersten Position, in der die wenigstens eine Lehne im Wesentlichen im rechten Winkel zur Sitzfläche steht und einer zweiten Position, in der die Sitzfläche und die wenigstens eine Lehne eine im Wesentlichen ebene Fläche bilden, verändern. Die wenigstens eine Lehne liegt an ihrem ersten Ende an der Sitzfläche an. Ein zweites Ende der Lehne umfasst mindestens ein pneumatisches Kissen, welches mit einer Pumpe fluidisch verbunden ist. Die Pumpe wird über eine Steuerungsvorrichtung gesteuert, welche derart konfiguriert ist, dass beim Bewegen der Rückenlehne von der ersten Position in die zweite Position das pneumatische Kissen durch die Pumpe im Wesentlichen vollständig entleert oder aufgeblasen wird.

Durch das Vorsehen von mindestens einem pneumatischen Kissen lässt sich die Länge der wenigstens einen Lehne dynamisch verändern und an die jeweilige Position der wenigstens einen Lehne relativ zur Sitzfläche anpassen. Da hierfür keine Mechanik nötig ist, kann der Fahrzeugsitz relativ einfach aufgebaut und Gewicht eingespart werden, was insbesondere beim Einsatz als Flugzeugsitz wesentliche Vorteile aufweist. Zudem lässt sich durch das dynamische Anpassen der Länge der wenigstens einen Lehne durch das Aufblasen und Entleeren des mindestens einen pneumatischen Kissens beim Bewegen der wenigstens einen Lehne eine Kollision des zweiten Endes der wenigstens einen Lehne mit einem weiteren Fahrzeugsitz oder einem weiteren Kabinenelement verhindern.

Als "Fahrzeug" im Sinne der vorliegenden Anmeldung werden sämtliche Beförderungsmittel verstanden, mit denen sich Personen zu Lande, in der Luft oder auf dem Wasser transportieren lassen. Dies sind insbesondere Automobile, Busse, Züge, Flugzeuge, Helikopter, Boote und Schiffe. Dementsprechend wird unter dem Begriff "Fahrzeugsitz" ein Sitz zum Einsatz in einem dieser Fahrzeuge verstanden.

Die Verstellvorrichtung ist vorzugsweise mit einem elektrischen Motor ausgerüstet, so dass sich der Winkel zwischen der Sitzfläche und der wenigstens einen Lehne über ein entsprechendes Steuerungsgerät durch einen Benutzer des Fahrzeugsitzes verstellen lässt. Alternativ kann die Verstellvorrichtung jedoch auch nur aus einer Mechanik bestehen, welche das Verstellen der wenigstens einen Lehne durch Drücken oder Ziehen des Benutzers sowie die Arretierung der Lehne in einem bestimmten Winkel zwischen Sitzfläche und Rückenlehne erlaubt.

Die erste Position entspricht einer normalen Sitzlage. Dabei steht die wenigstens eine Lehne im Wesentlichen in einem rechten Winkel zur Sitzfläche. "Im Wesentlichen" bedeutet in der vorliegenden Anmeldung eine Abweichung von höchstens 10°, vorzugsweise jedoch höchstens weniger als 5° zum rechten Winkel. Besonders bevorzugt umfassen sowohl die Sitzfläche als auch die wenigstens eine Lehne einen in seiner Härte einstellbares Kissen, welches insbesondere als mindestens ein weiteres pneumatisches Kissen ausgestaltet ist.

In der zweiten Position beträgt der Winkel zwischen der Rückenlehne und der Sitzfläche ca. 180°, d.h. die Sitzfläche und die wenigstens eine Lehne bilden eine im Wesentlichen ebene Fläche, welche insbesondere zum Liegen geeignet ist.

Die Verstellvorrichtung ist vorzugsweise derart ausgebildet, dass eine Arretierung der wenigstens einen Lehne in jedem beliebigen Winkel zwischen der ersten und zweiten Position möglich ist, damit ein Benutzer des Fahrzeugsitzes eine grösstmögliche Flexibilität beim Einstellen einer ihm angenehmen Sitzposition erhält.

Das zweite Ende der Lehne umfasst mindestens ein pneumatisches Kissen. Als "pneumatisches Kissen" wird eine von einem flächigen Material umschlossene Kammer verstanden, welche mit einem Fluid, insbesondere mit Luft, aufgeblasen werden kann. Dementsprechend lässt sich das Volumen eines pneumatischen Kissens durch Variation der eingefüllten Menge an Fluid verändern. Insbesondere bevorzugt kann das wenigstens eine pneumatische Kissen beim erfindungsgemässen Fahrzeugsitz durch aktives Aufblasen und Entleeren in seinem Volumen verändert werden.

Insbesondere bevorzugt besteht das zweite Ende der Lehne ausschliesslich aus dem mindestens einen pneumatischen Kissen.

Das wenigstens eine pneumatische Kissen ist besonders bevorzugt in der Erstreckungsrichtung der Lehne angeordnet. Wenn das wenigstens eine pneumatische Kissen vollständig aufgeblasen ist, weist die wenigstens eine Lehne demnach eine grössere Länge auf als wenn das mindestens eine pneumatische Kissen vollständig entleert ist. Dementsprechend kann durch Aufblasen und durch Entleeren des wenigstens einen pneumatischen Kissens die Gesamtlänge der wenigstens einen Lehne vergrössert bzw. verkleinert werden.

Das Aufblasen und Entleeren des wenigstens einen pneumatischen Kissens erfolgt vorzugsweise durch eine Pumpe, welche mit dem pneumatischen Kissen fluidisch verbunden ist. Die Pumpe kann über mindestens eine Zuleitung ein Fluid entweder in das wenigstens eine pneumatische Kissen hineinpumpen oder dieses durch Absaugen entleeren

Die mindestens eine Zuleitung verfügt vorzugsweise über mindestens ein Ventil, mit dem die fluidische Verbindung zwischen der Pumpe und dem mindestens einen pneumatischen Kissen unterbrochen oder freigegeben werden kann. Dadurch lassen sich mehrere pneumatische Kissen mit derselben Pumpe aufblasen beziehungsweise entleeren. Insbesondere bevorzugt sind mehrere derartige Ventile in einem Ventilblock zusammengefasst. Dies hat den Vorteil, dass alle Ventile für einen oder mehrere Fahrzeugsitze zentral an einem Ort gesammelt sind, wobei die Verbindung zwischen jedem Ventil und dem entsprechenden pneumatischen Kissen über eine spezifische Zuleitung erfolgt. Ferner lässt sich jedem Ventilblock eine Pumpe zuordnen. Dies vereinfacht den Aufbau des Fahrzeugsitzes und ermöglicht auch eine vereinfachte Wartung sowie ein einfacher Ersatz der Ventile.

Alternativ kann der Fahrzeugsitz auch Anschlussventile aufweisen, mit denen das mindestens eine pneumatische Kissen mit einem Druckluft- und/oder Unterdrucksystem des Fahrzeugs verbunden werden kann, wobei in diesem Fall das Aufblasen und Entleeren des wenigstens einen pneumatischen Kissens über entsprechende Ventile gesteuert wird. Weiter bevorzugt umfasst der Fahrzeugsitz weitere pneumatische Kissen auf der Sitzfläche und/oder der wenigstens einen Lehne, wobei diese durch die Steuerungsvorrichtung zumindest teilweise aufgeblasen und entleert werden können um ein individuelles Einstellen der Härte dieser Flächen oder auch von Teilbereichen dieser Flächen durch den Benutzer zu ermöglichen.

Die Steuerungsvorrichtung ist vorzugsweise eine elektronische Steuerung, welche einen Mikrochip sowie ein Speichermodul umfasst.

Die Steuerungsvorrichtung ist vorzugsweise mit wenigstens einem Sensor ausgestattet oder über eine Schnittstelle mit der Verstellvorrichtung verbunden, um den Winkel zwischen der wenigstens einen Lehne und der Sitzfläche bestimmen zu können. So kann bei Erreichen eines bestimmten Winkels zwischen der Sitzfläche und der wenigstens einen Lehne das mindestens eine pneumatische Kissen entleert beziehungsweise aufgeblasen werden.

"Im Wesentlichen vollständig entleert" bedeutet im Rahmen der vorliegenden Anmeldung, dass das Volumen des pneumatischen Kissens durch Entfernung des Fluids auf weniger als 2%, besonders bevorzugt auf weniger als 1% des vollständig aufgeblasenen Volumens verkleinert vorliegt.

Besonders bevorzugt ist die wenigstens eine Lehne als Rückenlehne ausgebildet, wobei die Steuerungsvorrichtung derart konfiguriert ist, dass das wenigstens eine pneumatische Kissen beim Bewegen der Rückenlehne von der ersten Position in die zweite Position im Wesentlichen vollständig entleert wird.

Dadurch kann eine Kollision der Rückenlehne mit einem weiteren Fahrzeugsitz oder mit einem Element der Fahrzeugkabine während der Bewegung der Rückenlehne effizient verhindert werden.

Vorzugsweise ist die Steuerungsvorrichtung derart konfiguriert, dass das mindestens eine pneumatische Kissen in der zweiten Position der Rückenlehne vollständig entleert vorliegt. Dadurch lässt sich die für den Fahrzeugsitz nötige Grundfläche in der zweiten Position gegenüber einem Fahrzeugsitz, bei dem keine Längenveränderung der Rückenlehne stattfindet, verkleinern.

In einer weiteren, besonders bevorzugten Ausführungsform ist die Steuerungsvorrichtung jedoch derart konfiguriert, dass das mindestens eine pneumatische Kissen nach Erreichen eines ersten vorbestimmten Winkels zwischen der Sitzfläche und der Rückenlehne zunächst vollständig entleert wird und bei Erreichen eines zweiten, vorbestimmten Winkels wieder aufgeblasen wird, wobei das mindestens eine pneumatische Kissen bei Erreichen der zweiten Position durch die Rückenlehne zumindest teilweise aufgeblasen ist. Dadurch kann bei der Passage eines bestimmten Bereichs während der Bewegung der Rückenlehne eine Kollision derselben mit einem Element der Fahrzeugkabine verhindert werden.

Beispielsweise kann es bei Flugzeugsitzen, die in einem Winkel zur Kabinenwand stehen, beim Verstellen der Rückenlehne einen Bereich geben, bei dem die Rückenlehne mit der Kabinenwand kollidieren würde. Durch das Entleeren des mindestens einen pneumatischen Kissens kann die Länge der Rückenlehne soweit reduziert werden, dass eine kollisionsfreie Passage des zweiten Endes der Rückenlehne an der Kabinenwand möglich ist. Da aufgrund der Krümmung der Kabinenwand bei Erreichen der zweiten Position zwischen dem zweiten Ende der Rückenlehne und der Kabinenwand wieder mehr Platz zur Verfügung steht, kann nach erfolgter Passage des zweiten Endes der Rückenlehne das mindestens eine pneumatische Kissen wieder zumindest teilweise, bevorzugt jedoch vollständig aufgeblasen werden, damit einem Benutzer des Flugzeugsitzes die grösstmögliche Liegefläche zur Verfügung steht.

Vorzugsweise weist der Fahrzeugsitz einen Rahmen auf, der in der zweiten Position das zweite Ende der Rückenlehne zumindest teilweise umschliesst.

Der Rahmen umschliesst zumindest einen Teil des Fahrzeugsitzes, um eine wenigstens partielle Abtrennung des Sitzbereiches zum Innenraum des Fahrzeugs zu ermöglichen. Insbesondere beim Einsatz des erfindungsgemässen Fahrzeugsitzes als Flugzeugsitz kann so einem Benutzer eine gewisse Privatsphäre geboten werden. Der Rahmen erstreckt sich insbesondere bevorzugt hinter der Rückenlehne und teilweise seitlich zum Sitz. Dadurch kann für einen Benutzer eine Art "Einzelkabinengefühl" geschaffen werden. Zudem können auf und im Rahmen Ablageflächen oder sonstige funktionale Elemente, wie Ausziehtische oder Unterhaltungssysteme integriert werden.

Besonders bevorzugt ist der Rahmen derart ausgestaltet, dass das zweite Ende der Rückenlehne in der zweiten Position von diesem gänzlich umschlossen wird. Dies schirmt einen Benutzer während des Schlafes vor Geräuschen des Fahrzeugs oder von Mitreisenden ab und erhöht so dessen Komfort. In der ersten Position wird das zweite Ende der Rückenlehne mit dem mindestens einen pneumatischen Kissen vorzugsweise nicht vom Rahmen umschlossen.

Bevorzugt ist der Rahmen relativ zur Sitzfläche zumindest in horizontaler Richtung unbeweglich angeordnet. Da sich durch das Entleeren des wenigstens einen pneumatischen Kissens die Gesamtlänge der Rückenlehne verkleinern lässt, ist eine relative Bewegung zwischen der Sitzfläche und dem Rahmen nicht nötig, um eine Kollision der Rückenlehne mit dem Rahmen beim Verstellen der Rückenlehne in die zweite Position zu verhindern.

Besonders bevorzugt ist die Sitzfläche nur in Bezug auf eine Bewegung in horizontaler Richtung relativ zum Rahmen unbeweglich ausgestaltet, während eine vertikale Bewegung relativ zum Rahmen möglich bleibt. Dadurch kann der Abstand der Sitzfläche zum Fahrzeugboden verändert werden, was eine optimale Anpassung der Sitzhöhe an die Grösse eines Benutzers, insbesondere an dessen Beinlänge, erlaubt. Ferner kann auch vorgesehen sein, dass sich der Winkel zumindest eines Teils der Sitzfläche zum Fahrzeugboden verändern lässt. Dadurch kann der Fahrzeugsitz durch einen Benutzer optimal auf seine Bedürfnisse eingestellt werden.

Bevorzugt ist die Lehne als Beinlehne ausgebildet, wobei die Steuerungsvorrichtung derart konfiguriert ist, dass das wenigstens eine pneumatische Kissen beim Bewegen der Beinlehne von der ersten Position in die zweite Position durch die Pumpe im Wesentlichen vollständig aufgeblasen wird. Dadurch kann eine optimale Stützung der Beine eines Benutzers des Fahrzeugsitzes erzielt werden.

Insbesondere bevorzugt ist die Steuerungsvorrichtung weiter derart konfiguriert, dass in der zweiten Position das mindestens eine pneumatische Kissen der Beinlehne vollständig aufgeblasen ist. Üblicherweise ist in der ersten Position die Beinstütze derart dimensioniert, dass diese bis zum Fahrzeugboden reicht oder einen Zwischenraum zu diesem freilässt, um ein kleineres Gepäckstück unter dem Sitz verstauen zu können. Beim Bewegen der Beinstütze in die zweite Position ist die Länge der Beinlehne dann zu kurz, um die Beine des Benutzers vollständig zu stützen. Oft werden daher in höheren Buchungsklassen in Flugzeugen sog. "Ottomans" vorgesehen, auf denen ein Benutzer des Sitzes die Füsse auflegen kann. Allerdings bleibt aufgrund der beschränkten Länge der Beinlehne in der Regel eine Lücke bestehen, welche sich negativ auf den Liegekomfort auswirken kann. Durch das Aufblasen des mindestens einen pneumatischen Kissens lässt sich nun eine durchgängige Stützung der Beine des Benutzers erreichen, indem diese Lücke durch das mindestens eine pneumatische Kissen überbrückt wird, was den Liegekomfort wesentlich erhöht.

Vorzugsweise ist die Steuerungsvorrichtung derart konfiguriert, dass das mindestens eine pneumatische Kissen in Abhängigkeit des Winkels zwischen Sitzfläche und der wenigstens einen Lehne aufgeblasen oder entleert wird.

Dadurch lässt sich eine stets optimale Länge der wenigstens einen Lehne einstellen, so dass keine Kollision der wenigstens einen Lehne mit einem weiteren Fahrzeugsitz oder einem anderen Element der Fahrzeugkabine stattfindet. Die Entleerung bzw. das Aufblasen des mindestens einen pneumatischen Kissens erfolgt durch die Pumpe vorzugsweise bei Erreichen eines bestimmten Winkels zwischen der wenigstens einen Lehne und der Sitzfläche. Dementsprechend ist die Steuerungsvorrichtung mit der Verstellvorrichtung gekoppelt. Alternativ kann ein mit der Steuerungsvorrichtung verbundener Sensor den Winkel zwischen der Sitzfläche und der wenigstens einen Lehne überwachen. Weiter bevorzugt kann auch vorgesehen sein, dass das mindestens eine pneumatische Kissen kontinuierlich bei der Verstellung der wenigstens einen Lehne von der ersten Position in Richtung der zweiten Position entleert bzw. beim Verstellen von der zweiten Position in Richtung der ersten Position kontinuierlich aufgeblasen wird oder umgekehrt.

Bevorzugt umfasst der Fahrzeugsitz einen Drucksensor, der den Druck eines im mindestens einen pneumatischen Kissen befindlichen Fluids kontinuierlich misst. Die Steuerungsvorrichtung ist ferner derart konfiguriert, dass bei Überschreiten eines vorbestimmten Maximaldrucks durch die Pumpe Fluid aus dem mindestens einen pneumatischen Kissen entleert wird, bis der vorbestimmte Maximaldruck erreicht wird.

Dadurch wird erreicht, dass sich bei einer allfälligen Kollision des mindestens einen pneumatischen Kissens während der Bewegung der wenigstens einen Lehne mit einem Hindernis das mindestens eine pneumatische Kissen automatisch soweit entleert, dass sich dieses an dem Hindernis vorbei bewegen kann ohne Schaden zu nehmen. Würde nämlich kein Fluid abgepumpt könnte bei einer Kollision des mindestens einen pneumatischen Kissens mit einem Hindernis, wie beispielsweise einer Wandung der Fahrzeugkabine, dieses zwischen der wenigstens einen Lehne und dem Hindernis gequetscht werden, wodurch der Druck des Fluids im Innern des mindestens einen pneumatischen Kissens ansteigen würde. Durch diesen Druckanstieg könnte es zur Beschädigung des mindestens einen pneumatischen Kissens, wie beispielsweise zur Bildung eines Risses, kommen.

Durch die kontinuierliche Messung des Druckes kann zu jeder Zeit eine entsprechende Entleerung des Fluids durch die Pumpe erfolgen, also beispielsweise auch wenn die Lehne nicht bewegt wird. Dadurch können Beschädigungen des mindestens einen pneumatischen Kissens durch Kollisionen mit Objekten, beispielsweise aus einem Gepäckfach fallende Gepäckstücke, verhindert werden.

Als Drucksensor können alle einem Fachmann bekannten Drucksensoren eingesetzt werden, welche eine kontinuierliche Druckmessung ermöglichen. Unter "kontinuierliche Druckmessung" wird im Rahmen der vorliegenden Erfindung auch jede Messung verstanden, bei der der Druck nur zeitweise, jedoch in regelmässigen und kurzen Abständen gemessen wird, beispielsweise alle paar Mikrosekunden bis maximal alle 5 Sekunden.

Vorzugsweise ist der Drucksensor in oder an einer Zuleitung zwischen Pumpe und dem mindestens einen pneumatischen Kissen angeordnet. Wird ein Ventilblock eingesetzt, so kann auf der Seite der Zuleitung an jedem Ventil ein Drucksensor angeordnet sein. Dadurch wird eine simple Konstruktion des Fahrzeugsitzes ermöglicht.

Eine derartige kontinuierliche Druckmessung mit anschliessender Nachregelung des Druckes bei Überschreitung des vorbestimmten Maximaldrucks kann nicht nur im Rahmen der vorliegenden Erfindung verwendet werden, sondern kann auch bei anderen Anwendungen, bei denen ein pneumatisches Kissen eingesetzt wird, zum Einsatz gelangen. So kann eine derartige Regelung beispielsweise auch auf pneumatische Kissen, welche als Sitzfläche, Rückenlehne, Raumteiler, Unterlage, Liegefläche oder dergleichen eingesetzt werden, verwendet werden. Ganz allgemein können damit pneumatische Kissen in den unterschiedlichsten Einsatzgebieten ausgerüstet werden.

Der vorbestimmte Maximaldruck im Innern des mindestens einen pneumatischen Kissens des erfindungsgemässen Fahrzeugsitzes beträgt vorzugsweise 5 kPa (50 mbar). Je nach Einsatzzweck des pneumatischen Kissens können jedoch auch andere Maximaldrücke vorgesehen sein, wie beispielsweise 10 kPa (100 mbar) oder 1 kPa (10 mBar).

Insbesondere bevorzugt ist der erfindungsgemässe Fahrzeugsitz ein Flugzeugsitz. Durch die platz- und gewichtsparende Konstruktion und dem gesteigerten Komfort für den Benutzer eignet sich ein erfindungsgmässer Fahrzeugsitz ausgezeichnet für den Einsatz in Flugzeugen, insbesondere in Kabinen der höheren Buchungsklassen.

Die vorliegende Anmeldung betrifft ferner ein Verfahren zum Bewegen wenigstens einer Lehne eines Fahrzeugsitzes von einer ersten Position, in der die wenigstens eine Lehne im Wesentlichen im rechten Winkel zu einer Sitzfläche steht, in eine zweite Position, in der die wenigstens eine Lehne mit der Sitzfläche eine im Wesentlichen ebene Fläche bildet. Ein zweites Ende der wenigstens einen Lehne umfasst mindestens ein pneumatisches Kissen, welches durch eine Pumpe während einer Bewegung von der ersten Position in die zweite Position vollständig entleert oder aufgeblasen wird.

Das Aufblasen und Entleeren durch die Pumpe erfolgt vorzugsweise vollständig automatisiert, beispielsweise durch eine Steuerungsvorrichtung, welche in Abhängigkeit des Winkels zwischen der wenigstens einen Lehne und der Sitzfläche das Aufblasen beziehungsweise Entleeren des mindestens einen pneumatischen Kissens durch die Pumpe veranlasst. Beispielsweise kann die Steuerungsvorrichtung mit der Verstellvorrichtung gekoppelt sein. Alternativ kann auch ein mit der Steuerungsvorrichtung verbundener Sensor eine Bewegung der wenigstens einen Lehne von der ersten in die zweite Position oder umgekehrt detektieren.

Vorzugsweise wird eine Rückenlehne bewegt, wobei das mindestens eine pneumatische Kissen während der Bewegung von der ersten Position in die zweite Position vollständig entleert wird.

Insbesondere in engen Platzverhältnissen innerhalb eines Fahrzeugs kann durch das vollständige Entleeren des mindestens einen pneumatischen Kissens die Länge der Rückenlehne bei einer Bewegung von der zweiten Position in die erste Position verkleinert werden, wodurch eine allfällige Kollision des zweiten Endes der Rückenlehne mit einem weiteren Fahrzeugsitz oder einem anderen Element der Fahrzeugkabine verhindert werden kann. Dies ist insbesondere bei Flugzeugsitzen vorteilhaft, da so insgesamt mehr Sitze hintereinander angeordnet werden können, ohne dass beim Verstellen der Rückenlehne in die zweite Position eine Kollision mit einem anderen Fahrzeugsitz oder einem Element der Kabine droht.

Bevorzugt wird das mindestens eine pneumatische Kissen bei Erreichen eines ersten vorbestimmten Winkels zwischen der Rückenlehne und der Sitzfläche durch die Pumpe vollständig entleert und bei Erreichen eines zweiten vorbestimmten Winkels anschliessend wieder gefüllt, so dass das mindestens eine pneumatische Kissen bei Erreichen der zweiten Position durch die Rückenlehne mindestens teilweise gefüllt ist.

Dies ermöglicht eine Reduktion der Länge der Rückenlehne während zumindest eines Teils der Bewegung zwischen der ersten Position und der zweiten Position, so dass beispielsweise eine Kollision mit einem Element der Fahrzeugkabine verhindert werden kann. Anschliessend wird das mindestens eine pneumatische Kissen wieder gefüllt, um z.B. einem Benutzer des Fahrzeugsitzes eine maximale Liegefläche zu bieten.

Die beiden Winkel werden anhand der tatsächlichen räumlichen Verhältnisse im Innern der Kabine des Fahrzeugs bestimmt, wobei diese insbesondere bevorzugt in der Steuerungsvorrichtung gespeichert werden. Vorzugsweise betragen der erste vorbetimmte Winkel 40° und der zweite vorbestimmte Winkel 75°.

Vorzugsweise liegt das mindestens eine pneumatische Kissen in der zweiten Position der Rückenlehne vollständig entleert vor. Dies ermöglicht eine Reduktion der für den Fahrzeugsitz benötigten Grundfläche in der zweiten Position, wodurch in der Fahrzeugkabine mehr Sitze hintereinander angeordnet werden können.

Weiter bevorzugt wird eine Beinlehne bewegt, wobei das mindestens eine pneumatische Kissen beim Bewegen der Beinlehne von der ersten Position in die zweite Position vollständig aufgeblasen wird.

Dadurch kann in der zweiten Position, welche einer Liege- oder Relaxposition entspricht, die Beinlehne eine genügend grosse Länge aufweisen, um die Beine eines Benutzers des Fahrzeugsitzes optimal zu stützen.

Bevorzugt wird mittels eines Drucksensors der Druck eines im mindestens einen pneumatischen Kissen gefüllten Fluids kontinuierlich gemessen, wobei bei Überschreiten eines vorbestimmten Maimaldruckes über die Pumpe Fluid aus dem mindestens einen pneumatischen Kissen entleert wird bis der Druck dem Maximaldruck entspricht.

Dies ermöglicht selbst bei einer fehlerhaften Funktion der Steuerungsvorrichtung beim entleeren beziehungsweise aufblasen des mindestens einen pneumatischen Kissens ein vorbeiquetschen des mindestens einen pneumatischen Kissens zwischen der wenigstens einen Lehne und einem Hindernis, da eine Erhöhung des Druckes im Innern des mindestens einen pneumatischen Kissens durch die Kollision mit dem Hindernis automatisch zu einer Verringerung des im mindestens einen pneumatischen Kissens gefüllten Fluids durch die Pumpe führt.

Dieser Verfahrensschritt muss nicht zwingend nur in Kombination mit dem erfindungsgemässen Verfahren zum Bewegen wenigstens einer Lehne verwendet werden, sondern kann auch unabhängig davon bei pneumatischen Kissen jedweder Art angewendet werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Einen erfindungsgemässen Fahrzeugsitz mit einer Rückenlehne in der ersten Position;
- Fig. 2: den Fahrzeugsitz aus der Fig. 1 mit der Rückenlehne in der zweiten Position:
- Fig. 3a - 3c: eine weitere Ausführungsform des erfindungsgemässen Fahrzeugsitzes mit der Rückenlehne in verschiedenen Positionen;
- Fig. 4: ein erfindungsgemässer Fahrzeugsitz mit einer Beinlehne in der ersten Position;
- Fig. 5: der Fahrzeugsitz aus der Fig. 4 mit der Beinlehne in der zweiten Position.

Grundsätzlich sind in den Figuren gleiche Teile mit gleichen Bezugszeichen versehen.

### Wege zur Ausführung der Erfindung

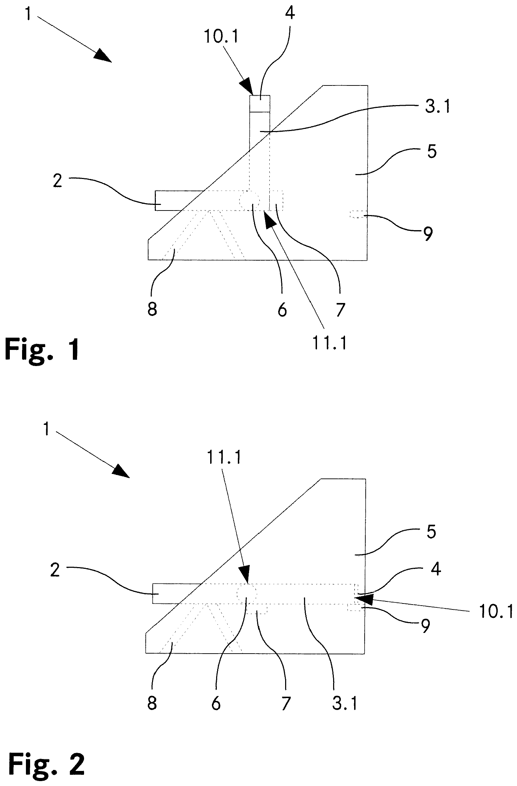

Die Fig. 1 zeigt eine Ausführungsform eines erfindungsgemässen Fahrzeugsitzes 1 mit einer verstellbaren Rückenlehne 3.1 in einer ersten Position. In dieser ersten Position steht eine Rückenlehne 3.1 im Wesentlichen im rechten Winkel zu einer Sitzfläche 2 des Fahrzeugsitzes 1. Über eine Verstellvorrichtung 6 lässt sich der Winkel zwischen der Sitzfläche 2 und der Rückenlehne 3.1 verändern, d.h. die Rückenlehne 3.1 lässt sich relativ zur Sitzfläche 2 bewegen. Vorzugsweise umfasst die Verstellvorrichtung 6 einen elektrischen Motor, mit dem sich der Winkel zwischen der Sitzfläche 2 und der Rückenlehne 3.1 verstellen lässt. Die Rückenlehne 3.1 liegt an einem ersten Ende 11.1 an der Sitzfläche 2 an. Das zweite Ende 10.1 der Rückenlehne 3.1 umfasst ein pneumatisches Kissen 4, welches als Kopfstütze dient. Das pneumatische Kissen 4 ist über Zuleitungen (nicht gezeigt) mit einer Pumpe 7 verbunden, wobei sich das pneumatische Kissen 4 über die Pumpe 7 aufblasen und entleeren lässt. In der ersten Position ist das pneumatische Kissen 4 vollständig aufgeblasen, d.h. die Rückenlehne 3.1 weist in dieser Position eine maximale Länge auf. Die Pumpe 7 wird dabei von einer Steuerungsvorrichtung (nicht gezeigt) gesteuert, d.h. die Steuerungsvorrichtung gibt der Pumpe 7 sowie allfällig vorhandenen Ventilen entsprechende Steuerungsbefehle, um das pneumatische Kissen aufzublasen oder zu entleeren.

Der Fahrzeugsitz ist über einen entsprechenden Unterbau 8, welcher in der gezeigten Ausführungsform beispielhaft als Beine ausgestaltet ist, mit einem Boden des Fahrzeugs verbunden. Ferner wird der Fahrzeugsitz 1 teilweise von einem Rahmen 5 umschlossen. In der ersten Position wird das zweite Ende 10.1 der Rückenlehne und somit das pneumatische Kissen 4 vom Rahmen 5 nicht umschlossen. Wird die Rückenlehne 3.1 in die zweite Position bewegt, so umschliesst der Rahmen 5 dieses zweite Ende 10.1 mit dem pneumatischen Kissen 4 zumindest teilweise. Der Rahmen 5 verfügt über eine Stütze 9, welche die Rückenlehne 3.1 in der zweiten Position stützt (wie in Fig. 2 gezeigt).

Die Fig. 2 zeigt den Fahrzeugsitz 1 aus der Fig. 1 in der zweiten Position. Die Sitzfläche 2 sowie die Rückenlehne 3.1 bilden eine im Wesentlichen ebene Fläche, d.h. der Winkel zwischen der Sitzfläche 2 und der Rückenlehne 3.1 beträgt annähernd 180°. In dieser zweiten Position ist das pneumatische Kissen 4 vollständig leer, d.h. die Rückenlehne 3.1 weist eine minimale Länge auf. Durch diese Verkleinerung der Länge der Rückenlehne 3.1 wird eine Kollision mit dem Rahmen 5 vermieden, der in der zweiten Position das zweite Ende 10.1 mit dem pneumatischen Kissen 4 umschliesst. Bei einer Ausgestaltung des Fahrzeugsitzes 1 ohne pneumatisches Kissen 4 müsste der Rahmen 5 in horizontaler Richtung länger ausgestaltet sein, wodurch sich die nötige Grundfläche für den Fahrzeugsitz 1 erhöhen würde.

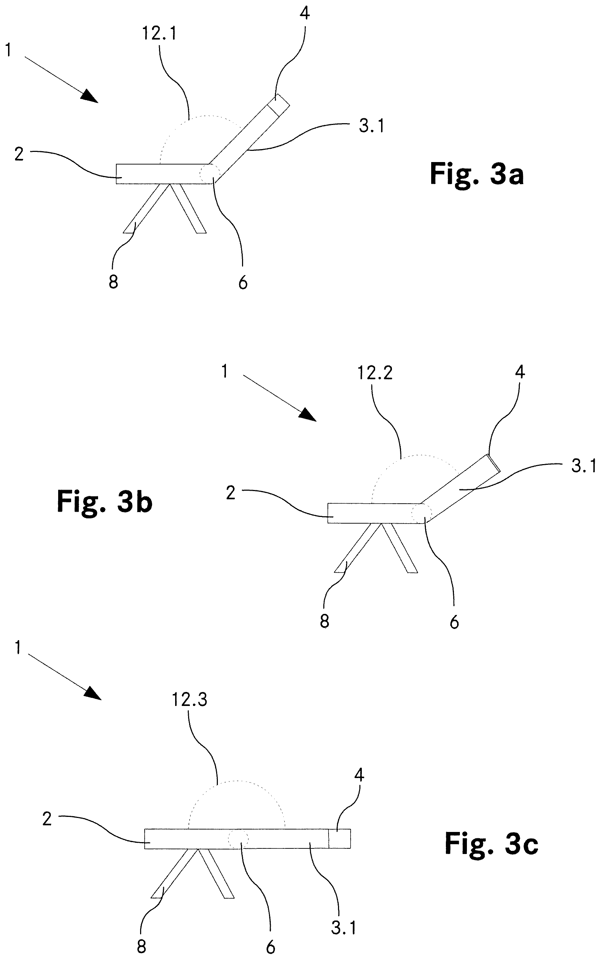

Die Figs. 3a - 3c zeigen eine zweite Ausführungsform eines erfindungsgemässen Fahrzeugsitzes 1 mit einer verstellbaren Rückenlehne 3.1. In dieser Ausführungsform wird das pneumatische Kissen 4 bei Erreichen eines ersten vorbestimmten Winkels 12.1 zwischen der Rückenlehne 3.1 und der Sitzfläche 2 vollständig entleert.

Die Fig. 3a zeigt den Fahrzeugsitz 1 bei Erreichen des ersten Winkels 12.1. Zwischen der ersten Position der Rückenlehne 3.1 und dem Erreichen des ersten Winkels 12.1 ist das pneumatische Kissen 4 vollständig aufgeblasen. Nachdem die Rückenlehne den ersten vorbestimmten Winkel 12.1 passiert hat, wird das pneumatische Kissen 4 vollständig entleert.

Im Bereich zwischen dem ersten vorbestimmten Winkel 12.1 und einem zweiten vorbestimmten Winkel 12.2 bleibt das pneumatische Kissen 4 vollständig entleert, wie dies in der Fig. 3b dargestellt ist. Erst bei Erreichen des zweiten vorbestimmten Winkels 12.2 wird das pneumatische Kissen 4 wieder aufgeblasen.

In der zweiten Position der Rückenlehne 3.1 liegt das pneumatische Kissen 4 vollständig aufgeblasen vor, wie dies auf der Fig. 3c dargestellt ist.

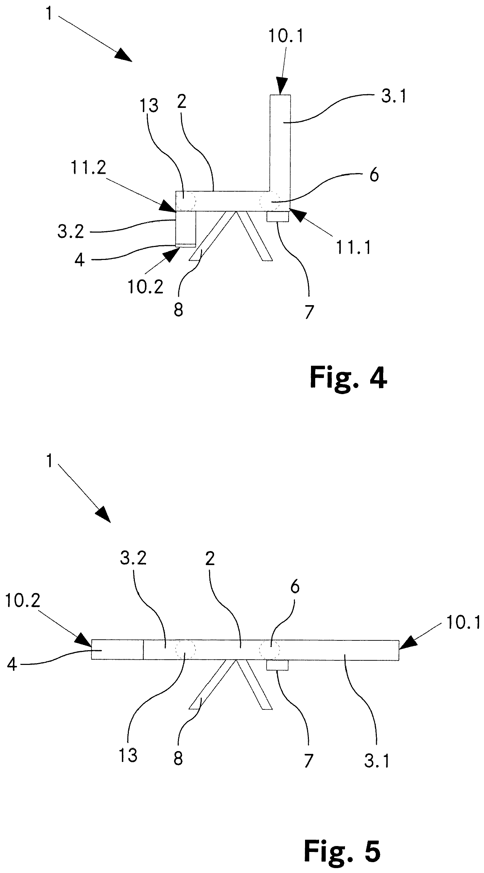

Die Fig. 4 zeigt eine weitere Ausführungsform eines erfindungsgemässen Fahrzeugsitzes 1 mit einer bewegbaren Beinlehne 3.2. Die Beinlehne 3.2 ist über einen zweiten Verstellmechanismus 13 von einer ersten Position, bei der die Beinlehne 3.2 im Wesentlichen im rechten Winkel zur Sitzfläche 2 steht, in eine zweite Position, in welcher die Beinlehne 3.2 und die Sitzfläche 2 im Wesentlichen eine ebene Fläche bilden (siehe Fig. 6), bewegbar.

Die Beinlehne 3.2 liegt mit einem ersten Ende 11.2 an der Sitzfläche 2 an. Ein zweites Ende 10.2 der Beinlehne 3.2 umfasst ein pneumatiches Kissen 4, welches mittels einer Pumpe 7 aufgeblasen oder entleert werden kann. Ferner umfasst der Fahrzeugsitz 1 eine Rückenlehne 3.1, welche über einen ersten Verstellmechanismus 6 relativ zur Sitzfläche 2 bewegbar ist. In der gezeigten Ausführungsform weist die Rückenlehne kein pneumatisches Kissen auf. Allerdings kann alternativ auch am zweiten Ende 10.1 der Rückenlehne 3.1 ein weiteres pneumatisches Kissen angeordnet sein, wie dies in den Ausführungsformen der Figs. 1 und 3 gezeigt ist.

Die Fig. 5 zeigt den Fahrzeugsitz 1 der Fig. 4 in der zweiten Position, wobei sowohl die Beinlehne 3.2 wie auch die Rückenlehne 3.1 beide relativ zur Sitzfläche 2 bewegt wurden, um eine im Wesentlichen ebene Fläche zu bilden. Während der Bewegung der Beinlehne 3.2 von der ersten Position in die zweite Position wurde das pneumatische Kissen 4 durch die Pumpe 7 vollständig aufgeblasen. Die Steuerung der Pumpe 7 sowie allfälliger Ventile erfolgt auch bei dieser Ausführungsform über eine Steuerungsvorrichtung (nicht gezeigt).

## Patentansprüche

1. Fahrzeugsitz (1) umfassend eine Sitzfläche (2) sowie wenigstens eine zur Sitzfläche in einem Winkel stehende Lehne (3.1, 3.2), wobei sich der Winkel zwischen der Sitzfläche (2) und der wenigstens einen Lehne (3.1, 3.2) über eine Verstellvorrichtung (6, 13) zwischen einer ersten Position, in der die wenigstens eine Lehne (3.1, 3.2) im Wesentlichen im rechten Winkel zur Sitzfläche (2) steht und einer zweiten Position, in der die Sitzfläche (2) und die wenigstens eine Lehne (3.1, 3.2) eine im Wesentlichen ebene Fläche bilden, verändern lässt, wobei die wenigstens eine Lehne (3.1, 3.2) mit einem ersten Ende (11.1, 11.2) an der Sitzfläche (2) anliegt, **dadurch gekennzeichnet, dass** ein zweites Ende (10.1, 10.2) der wenigstens einen Lehne (3.1, 3.2) wenigstens ein pneumatisches Kissen (4) umfasst, welches mit einer Pumpe (7) fluidisch verbunden ist, wobei die Pumpe (7) von einer Steuerungsvorrichtung gesteuert wird, welche derart konfiguriert ist, dass beim Bewegen der wenigstens einen Lehne (3.1, 3.2) von der ersten Position in die zweite Position das pneumatische Kissen (4) durch die Pumpe (7) im Wesentlichen vollständig entleert oder aufgeblasen wird.

2. Fahrzeugsitz (1) gemäss Anspruch 1, **dadurch gekennzeichnet, dass** die Lehne als Rückenlehne (3.1) ausgebildet ist und die Steuerungsvorrichtung derart konfiguriert ist, dass das wenigstens eine pneumatische Kissen (4) beim Bewegen der Rückenlehne (3.1) von der ersten Position in die zweite Position durch die Pumpe (7) im Wesentlichen vollständig entleert wird.

3. Fahrzeugsitz (1) gemäss Anspruch 2, **dadurch gekennzeichnet, dass** der Fahrzeugsitz (1) einen Rahmen (5) aufweist, wobei in der zweiten Position das zweite Ende (10.1) der Rückenlehne (3.1) vom Rahmen (5) mindestens teilweise umschlossen wird.

4. Fahrzeugsitz (1) gemäss einem der Ansprüche 2 oder 3, **dadurch gekennzeichnet, dass** der Rahmen (5) relativ zur Sitzfläche (2) zumindest in horizontaler Richtung unbeweglich angeordnet ist.

5. Fahrzeugsitz (1) gemäss einem der Ansprüche 1 bis 4, **dadurch gekennzeichnet, dass** die Lehne als Beinlehne (3.2) ausgebildet ist und die Steuerungsvorrichtung derart konfiguriert ist, dass das wenigstens eine pneumatische Kissen (4) beim Bewegen der Beinlehne (3.2) von der ersten Position in die zweite Position durch die Pumpe (7) im Wesentlichen vollständig aufgeblasen wird.

6. Fahrzeugsitz (1) gemäss einem der Ansprüche 1 bis 5, **dadurch gekennzeichnet, dass** die Steuerungsvorrichtung derart konfiguriert ist, dass das pneumatische Kissen (4) in Abhängigkeit des Winkels zwischen Sitzfläche (2) und der wenigstens einen Lehne (3.1, 3.2) durch die Pumpe (7) aufgeblasen oder entleert wird.

7. Fahrzeugsitz (1) gemäss einem der Ansprüche 1 bis 6, **dadurch gekennzeichnet, dass** der Fahrzeugsitz einen Drucksensor umfasst, der den Druck eines im mindestens einen pneumatischen Kissen (4) befindlichen Fluids kontinuierlich misst, wobei die Steuerungsvorrichtung derart konfiguriert ist, dass bei Überschreiten eines vorbestimmten Maximaldrucks durch die Pumpe (7) Fluid aus dem mindestens einen pneumatischen Kissen (4) entleert wird bis der vorbestimmte Maximaldruck erreicht wird.

8. Fahrzeugsitz (1) gemäss einem der Ansprüche 1 bis 7, **dadurch gekennzeichnet, dass** der Fahrzeugsitz (1) ein Flugzeugsitz ist.

9. Verfahren zum Bewegen wenigstens einer Lehne (3.1, 3.2) eines Fahrzeugsitzes (1) von einer ersten Position, in der die wenigstens eine Lehne (3.1, 3.2) im Wesentlichen im rechten Winkel zu einer Sitzfläche (2) steht, in eine zweite Position, in der die wenigstens eine Lehne (3.1, 3.2) mit der Sitzfläche (2) eine im Wesentlichen ebene Fläche bildet, **dadurch gekennzeichnet, dass** ein zweites Ende (10.1, 10.2) der wenigstens einen Lehne (3.1, 3.2) mindestens ein pneumatisches Kissen (4) umfasst, welches durch eine Pumpe (7) während einer Bewegung der wenigstens einen Lehne (3.1, 3.2) von der ersten Position in die zweite Position vollständig entleert oder aufgeblasen wird.

10. Verfahren gemäss Anspruch 9, **dadurch gekennzeichnet, dass** eine Rückenlehne (3.1) bewegt wird, wobei das mindestens eine pneumatische Kissen (4) während der Bewegung von der ersten Position in die zweite Position vollständig entleert wird.

11. Verfahren gemäss Anspruch 10, **dadurch gekennzeichnet, dass** das mindestens eine pneumatische Kissen (4) bei Erreichen eines ersten vorbestimmten Winkels (12.1) zwischen der Rückenlehne (3.1) und der Sitzfläche (2) durch die Pumpe (7) vollständig entleert und bei Erreichen eines zweiten vorbestimmten Winkels (12.2) anschliessend wieder gefüllt wird, so dass das mindestens eine pneumatische Kissen (4) bei Erreichen der zweiten Position durch die Rückenlehne (3.1) mindestens teilweise, vorzugsweise vollständig aufgeblasen ist.

12. Verfahren gemäss Anspruch 10, **dadurch gekennzeichnet, dass** das mindestens eine pneumatische Kissen (4) bei Erreichen der zweiten Position durch die Rückenlehne (3.1) vollständig entleert ist.

13. Verfahren gemäss Anspruch 9, **dadurch gekennzeichnet, dass** eine Beinlehne (3.2) bewegt wird, wobei das mindestens eine pneumatische Kissen (4) beim Bewegen der Beinlehne (3.2) von der ersten Position in die zweite Position vollständig aufgeblasen wird.

14. Verfahren gemäss einem der Ansprüche 10 bis 13, **dadurch gekennzeichnet, dass** mittels eines Drucksensors der Druck eines im mindestens einen pneumatischen Kissen (4) gefüllten Fluids kontinuierlich gemessen wird und bei Überschreiten eines vorbestimmten Maimaldruckes über die Pumpe (7) Fluid entleert wird bis der Druck dem Maximaldruck entspricht.

## Claims

1. Vehicle seat (1) comprising a seat surface (2) and at least one rest part (3.1, 3.2) at an angle to the seat surface, wherein the angle between the seat surface (2) and the at least one rest part (3.1, 3.2) can be altered via an adjusting device (6, 13) between a first position, in which the at least one rest part (3.1, 3.2) is substantially at right angles to the seat surface (2), and a second position, in which the seat surface (2) and the at least one rest part (3.1, 3.2) form a substantially flat surface, wherein the at least one rest part (3.1, 3.2) abuts on the seat surface (2) with a first end (11.1, 11.2), **characterized in that** a second end (10.1, 10.2) of the at least one rest part (3.1, 3.2) comprises at least one pneumatic cushion (4) which is fluidically connected to a pump (7), wherein the pump (7) is controlled by a control device which is configured such that the pneumatic cushion (4) is substantially completely emptied or inflated by the pump (7) when the at least one rest part (3.1, 3.2) moves from the first position into the second position.

2. Vehicle seat (1) according to Claim 1, **characterized in that** the rest part is in the form of a backrest (3.1) and the control device is configured such that the at least one pneumatic cushion (4) is substantially completely emptied by the pump (7) when the backrest (3.1) moves from the first position into the second position.

3. Vehicle seat (1) according to Claim 2, **characterized in that** the vehicle seat (1) has a frame (5), wherein, in the second position, the second end (10.1) of the backrest (3.1) is at least partially enclosed by the frame (5).

4. Vehicle seat (1) according to either of Claims 2 and 3, **characterized in that** the frame (5) is arranged so as to be immovable at least in the horizontal direction relative to the seat surface (2).

5. Vehicle seat (1) according to one of Claims 1 to 4, **characterized in that** the rest part is in the form of a legrest (3.2) and the control device is configured such that the at least one pneumatic cushion (4) is substantially completely inflated by the pump (7) when the legrest (3.2) moves from the first position into the second position.

6. Vehicle seat (1) according to one of Claims 1 to 5, **characterized in that** the control device is configured such that the pneumatic cushion (4) is inflated or emptied by the pump (7) depending on the angle between the seat surface (2) and the at least one rest part (3.1, 3.2).

7. Vehicle seat (1) according to one of Claims 1 to 6, **characterized in that** the vehicle seat comprises a pressure sensor which continuously measures the pressure of a fluid located in the at least one pneumatic cushion (4), wherein the control device is configured such that, in the event of a predetermined maximum pressure being exceeded, fluid is emptied from the at least one pneumatic cushion (4) by the pump (7) until the predetermined maximum pressure is reached.

8. Vehicle seat (1) according to one of Claims 1 to 7, **characterized in that** the vehicle seat (1) is an aircraft seat.

9. Method for moving at least one rest part (3.1, 3.2) of a vehicle seat (1) from a first position, in which the at least one rest part (3.1, 3.2) is substantially at right angles to a seat surface (2), into a second position, in which the at least one rest part (3.1, 3.2) forms a substantially flat surface with the seat surface (2), **characterized in that** a second end (10.1, 10.2) of the at least one rest part (3.1, 3.2) comprises at least one pneumatic cushion (4) which is completely emptied or inflated by a pump (7) during a movement of the at least one rest part (3.1, 3.2) from the first position into the second position.

10. Method according to Claim 9, **characterized in that** a backrest (3.1) is moved, wherein the at least one pneumatic cushion (4) is completely emptied during the movement from the first position into the second position.

11. Method according to Claim 10, **characterized in that** the at least one pneumatic cushion (4) is completely emptied by the pump (7) when a first predetermined angle (12.1) between the backrest (3.1) and the seat surface (2) is reached, and is subsequently filled again when a second predetermined angle (12.2) is reached, such that the at least one pneumatic cushion (4) is in an at least partially, and preferably completely inflated state when the second position is reached by the backrest (3.1).

12. Method according to Claim 10, **characterized in that** the at least one pneumatic cushion (4) is in a completely emptied state when the second position is reached by the backrest (3.1).

13. Method according to Claim 9, **characterized in that** a legrest (3.2) is moved, wherein the at least one pneumatic cushion (4) is completely inflated when the legrest (3.2) moves from the first position into the second position.

14. Method according to one of Claims 10 to 13, **characterized in that** the pressure of a fluid filled into the at least one pneumatic cushion (4) is continuously measured by means of a pressure sensor and, in the event of a predetermined maximum pressure being exceeded, fluid is emptied via the pump (7) until the pressure corresponds to the maximum pressure.

## Revendications

1. Siège de véhicule (1) comprenant une surface de siège (2) ainsi qu'au moins un dossier (3.1, 3.2) à un certain angle par rapport à la surface de siège, l'angle entre la surface de siège (2) et l'au moins un dossier (3.1, 3.2) pouvant être varié par le biais d'un dispositif de réglage (6, 13) entre une première position dans laquelle l'au moins un dossier (3.1, 3.2) est essentiellement à angle droit par rapport à la surface de siège (2) et une deuxième position dans laquelle la surface de siège (2) et l'au moins un dossier (3.1, 3.2) forment une surface essentiellement plane, l'au moins un dossier (3.1, 3.2) s'appliquant avec une première extrémité (11.1, 11.2) contre la surface de siège (2), **caractérisé en ce qu'**une deuxième extrémité (10.1, 10.2) de l'au moins un dossier (3.1, 3.2) comprend au moins un coussin pneumatique (4) qui est en liaison fluidique avec une pompe (7), la pompe (7) étant commandée par un dispositif de commande qui est configuré de telle sorte que lors du déplacement de l'au moins un dossier (3.1, 3.2) de la première position à la deuxième position, le coussin pneumatique (4) soit essentiellement complètement vidé ou gonflé par la pompe (7).

2. Siège de véhicule (1) selon la revendication 1, **caractérisé en ce que** le dossier est réalisé sous forme de dossier de siège (3.1) et le dispositif de commande est configuré de telle sorte que l'au moins un coussin pneumatique (4), lors du déplacement du dossier de siège (3.1) de la première position à la deuxième position, soit essentiellement complètement vidé par la pompe (7).

3. Siège de véhicule (1) selon la revendication 2, **caractérisé en ce que** le siège de véhicule (1) présente un cadre (5), la deuxième extrémité (10.1) du dossier de siège (3.1), dans la deuxième position, étant au moins en partie entourée par le cadre (5).

4. Siège de véhicule (1) selon l'une quelconque des revendications 2 ou 3, **caractérisé en ce que** le cadre (5) est disposé de manière non déplaçable par rapport à la surface de siège (2) au moins dans la direction horizontale.

5. Siège de véhicule (1) selon l'une quelconque des revendications 1 à 4, **caractérisé en ce que** le dossier est réalisé sous forme de porte-jambes (3.2) et le dispositif de commande est configuré de telle sorte que l'au moins un coussin pneumatique (4), lors du déplacement du porte-jambes (3.2) de la première position à la deuxième position, soit essentiellement complètement gonflé par la pompe (7).

6. Siège de véhicule (1) selon l'une quelconque des revendications 1 à 5, **caractérisé en ce que** le dispositif de commande est configuré de telle sorte que le coussin pneumatique (4) soit gonflé ou vidé par la pompe (7) en fonction de l'angle entre la surface de siège (2) et l'au moins un dossier (3.1, 3.2).

7. Siège de véhicule (1) selon l'une quelconque des revendications 1 à 6, **caractérisé en ce que** le siège de véhicule comprend un capteur de pression qui mesure en continu la pression d'un fluide se trouvant dans au moins un coussin pneumatique (4), le dispositif de commande étant configuré de telle sorte qu'en cas de dépassement d'une pression maximale prédéterminée par la pompe (7), du fluide soit évacué hors de l'au moins un coussin pneumatique (4) jusqu'à la pression maximale prédéterminée.

8. Siège de véhicule (1) selon l'une quelconque des revendications 1 à 7, **caractérisé en ce que** le siège de véhicule (1) est un siège d'avion.

9. Procédé pour déplacer au moins un dossier (3.1, 3.2) d'un siège de véhicule (1) d'une première position dans laquelle l'au moins un dossier (3.1, 3.2) est essentiellement à angle droit par rapport à une surface de siège (2), dans une deuxième position dans laquelle l'au moins un dossier (3.1, 3.2) forme avec la surface de siège (2) une surface essentiellement plane, **caractérisé en ce qu'**une deuxième extrémité (10.1, 10.2) de l'au moins un dossier (3.1, 3.2) comprend au moins un coussin pneumatique (4) qui est complètement vidé ou gonflé par une pompe (7) pendant un déplacement de l'au moins un dossier (3.1, 3.2) de la première position à la deuxième position.

10. Procédé selon la revendication 9, **caractérisé en ce qu'**un dossier de siège (3.1) est déplacé, l'au moins un coussin pneumatique (4) étant complètement vidé pendant le déplacement de la première position à la deuxième position.

11. Procédé selon la revendication 10, **caractérisé en ce que** l'au moins un coussin pneumatique (4), à l'obtention d'un premier angle prédéterminé (12.1) entre le dossier de siège (3.1) et la surface de siège (2), est complètement vidé par la pompe (7), et à l'obtention d'un deuxième angle prédéterminé (12.2), est ensuite à nouveau rempli de telle sorte que l'au moins un coussin pneumatique (4), à l'obtention de la deuxième position par le dossier de siège (3.1), soit gonflé au moins en partie, de préférence complètement.

12. Procédé selon la revendication 10, **caractérisé en ce que** l'au moins un coussin pneumatique (4), à l'obtention de la deuxième position par le dossier de siège (3.1), est complètement vidé.

13. Procédé selon la revendication 9, **caractérisé en ce qu'**un porte-jambes (3.2) est déplacé, l'au moins un coussin pneumatique (4) étant complètement gonflé lors du déplacement du porte-jambes (3.2) de la première position à la deuxième position.

14. Procédé selon l'une quelconque des revendications 10 à 13, **caractérisé en ce que** la pression d'un fluide remplissant au moins un coussin pneumatique (4) est mesurée en continu au moyen d'un capteur de pression et en cas de dépassement d'une pression maximale prédéterminée, du fluide est évacué par le biais de la pompe (7) jusqu'à ce que la pression corresponde à la pression maximale.
